# EUROPÄISCHE PATENTSCHRIFT

(11) **EP 3 247 813 B1**
(45) Veröffentlichungstag und Bekanntmachung des Hinweises auf die Patenterteilung: **03.03.2021**
(21) Anmeldenummer: 16705890.8
(22) Anmeldetag: 08.01.2016
(51) Int. Cl.: C22C 1/05, C22C 29/02, E21B 17/042, B22F 5/00

(54) **HARTMETALL-CERMET-VERBUNDWERKSTOFF UND VERFAHREN ZU DESSEN HERSTELLUNG**
HARD METAL-CERMET COMPOSITE MATERIAL AND METHOD FOR THE PRODUCTION THEREOF
MATÉRIAU COMPOSITE MÉTAL DUR-CERMET ET PROCÉDÉ DE PRODUCTION DUDIT MATÉRIAU

(30) Priorität: 23.01.2015 AT 162015 U
(43) Veröffentlichungstag der Anmeldung: 29.11.2017
(73) Patentinhaber: Ceratizit Austria Gesellschaft m.b.H., 6600 Reutte (AT)
(72) Erfinder: ZHANG, Jiulai, 6600 Reutte (AT); BARBIST, Roland, 6610 Wängle (AT)
(74) Vertreter: Ciesla, Dirk
(86) Internationale Anmeldenummer: PCT/AT2016/000001
(87) Internationale Veröffentlichungsnummer: WO 2016/115581

(56) Entgegenhaltungen:
- DE-A1- 10 143 573
- GB-A- 434 468
- JP-A- H10 219 385
- JP-A- 2011 132 057
- US-A- 5 880 382

## Beschreibung

Die vorliegende Erfindung betrifft einen Hartmetall-Cermet-Verbundwerkstoff, mit einer zusammenhängenden Phase aus Wolframkarbid-basiertem Hartmetall mit einem metallischen Binder und darin eingebetteten Wolframkarbid-Teilchen, wobei in der zusammenhängenden Phase aus Hartmetall verteilte Bereiche eines Titankarbid-, Titannitrid-, Titankarbonitrid-, Niobkarbid-, Niobkarbonitrid- oder Niobnitrid-basierten Cermets ausgebildet sind, die in einem zweiten metallischen Binder eingebettete Hartstoffteilchen aufweisen, sowie ein Verfahren zur Herstellung eines solchen Hartmetall-Cermet-Verbundwerkstoffs.

Für die zerspanende Bearbeitung von insbesondere metallischen Werkstoffen kommen seit vielen Jahren insbesondere Hartmetall, auch cemented carbide genannt, und sogenannte Cermets zum Einsatz, die sich durch einen besonders vorteilhaften Kompromiss zwischen einer großen Härte und Verschleißbeständigkeit einerseits und gleichzeitig einer relativ großen Zähigkeit andererseits auszeichnen. Sowohl bei Hartmetall als auch bei Cermets sind harte Teilchen, die insbesondere durch Metallkarbide oder -karbonitride gebildet sind und dem Material eine große Härte und Verschleißbeständigkeit vermitteln, in einer duktilen metallischen Matrix eingebettet, die dem Material eine gewisse Zähigkeit vermittelt. Als Material für die metallische Matrix kommen dabei üblicherweise Co, Ni und/oder Fe zum Einsatz, insbesondere Co und Co-Ni-Legierungen. Zumindest im Fall von Hartmetall sind die harten Teilchen meist durch Wolframkarbid (WC) gebildet, wobei häufig in geringeren Mengen andere Metallkarbide, insbesondere Karbide von Metallen der Gruppen IV, V und/oder VI des Periodensystems der Elemente, ebenfalls vorgesehen sein können. In dem Bereich der Cermets kommen als harte Teilchen häufig Titankarbid (TiC), Titankarbonitrid (TiCN) und Titanmischkarbide zum Einsatz.

Um die Verschleißbeständigkeit von Bauteilen aus Hartmetall oder Cermet für die Zerspanung weiter zu verbessern, werden die Bauteile häufig zusätzlich mit Hartstoffschichten beschichtet, die üblicherweise über chemische Gasphasenabscheidung (CVD) oder physikalische Gasphasenabscheidung (PVD) aufgebracht werden.

US 2010/0290849 A1 beschreibt einen Bohrer aus einem Verbundwerkstoff mit einem ersten Bereich aus einem ersten Hartmetallwerkstoff und einem stoffschlüssig mit diesem verbundenen zweiten Bereich aus einem zweiten Hartmetallwerkstoff, wobei zumindest einer der beiden Hartmetallwerkstoffe ein als Hybrid-Hartmetall bezeichneter Werkstoff ist, der eine verteilte Hartmetall-Phase und eine zusammenhängende Hartmetall-Phase aufweist.

JP H10-219385 A beschreibt einen Verbundwerkstoff, bei dem Bereiche aus einem Titan-Karbonitrid-Typ Cermet mit einem Bindergehalt von 8-15 Gew.-% Co und/oder Ni und darin eingebetteten harten (Ti, M)CN-Teilchen (mit M = Nb, Ta, W, Mo, Zr, V, Cr und/oder Hf) in einer zusammenhängenden Matrixstruktur aus einem Hartmetall mit 6-15 Gew.-% Co und/oder Ni und darin eingebetteten WC-Teilchen eingebunden sind. Mit diesem Verbundwerkstoff sollen insbesondere für die Bearbeitung von Stahl- und Gusseisen-Werkstoffen eine verbesserte Verschleißbeständigkeit und eine langanhaltende Schneidleistung bereitgestellt werden. Der beschriebene Verbundwerkstoff stellt aber keine zufriedenstellende Biegebruchfestigkeit bereit.

Es ist Aufgabe der vorliegenden Erfindung, einen verbesserten Verbundwerkstoff bereitzustellen, der für Werkzeuge für die zerspanende Bearbeitung von insbesondere metallischen Werkstoffen und Verbundwerkstoffen wie Metallmatrix-Verbundwerkstoffen (MMC), Aramidfaserverstärkten Kunststoff (AFK), Kohlenstofffaserverstärkten Kunststoff (CFK), Glasfaserverstärkten Kunststoff (GFK), insbesondere für einstückige Fräser, Bohrer und Reibwerkzeuge sowie für Schneideinsätze zum Fräsen, Drehen, Bohren und Reiben, und für Werkzeuge zur Umformung von Werkstoffen geeignet ist und eine verbesserte Bruchzähigkeit und Biegebruchfestigkeit bei gleichzeitig guter Verschleißbeständigkeit und geringer Verschweißneigung aufweist, sowie verbesserte Werkzeuge aus Verbundwerkstoff bereitzustellen.

Diese Aufgabe wird durch einen Hartmetall-Cermet-Verbundwerkstoff nach Anspruch 1 gelöst. Vorteilhafte Weiterbildungen sind in den abhängigen Ansprüchen angegeben.

Da zumindest 97 Vol.-% der verteilten Bereiche einen längsten Durchmesser von kleiner als 25 µm haben und zumindest 20 Vol.-% der verteilten Bereiche einen kürzesten Durchmesser haben, der zumindest dem Dreifachen des mittleren Durchmessers der Wolframkarbid-Teilchen entspricht, ist bei dem Verbundwerkstoff eine deutlich verbesserte Biegebruchfestigkeit bereitgestellt. Wenn weniger als 20 Vol.-% der verteilten Bereiche einen kürzesten Durchmesser haben, der zumindest dem Dreifachen des mittleren Durchmessers der Wolframkarbid-Teilchen entspricht, nähern sich die Eigenschaften und das Gefüge zu stark den Eigenschaften und dem Gefüge eines herkömmlichen Hartmetalls bzw. Cermets an.

Die Biegebruchfestigkeit des Verbundwerkstoffs wird dabei gemäß DIN EN ISO 3327 bestimmt. Die verteilten Bereiche weisen bevorzugt eine deutlich größere Härte und einen niedrigeren Gehalt an metallischem Binder als die zusammenhängende Phase aus Hartmetall auf. Der zweite metallische Binder der verteilten Bereiche kann in der Zusammensetzung gleich dem metallischen Binder der zusammenhängenden Phase aus Hartmetall sein, kann sich aber auch in der Zusammensetzung von diesem unterscheiden. Der (zweite) metallische Binder der verteilten Bereiche kann bevorzugt insbesondere durch Co oder eine Co-Ni-Legierung gebildet sein, wobei insbesondere auch in geringen Mengen andere Elemente in dem Binder gelöst sein können. Der metallische Binder der zusammenhängenden Phase aus Hartmetall kann bevorzugt durch Co gebildet sein, wobei wiederum insbesondere auch in geringen Mengen andere Elemente in dem Binder gelöst sein können. Die zusammenhängende Phase aus Hartmetall kann neben den WC-Teilchen auch zusätzlich weitere eingebettete Hartstoffteilchen aufweisen, insbesondere Karbide der Elemente der der Gruppen IV, V und/oder VI des Periodensystems der Elemente. Die verteilten Bereiche sind aus einem Titankarbid-basierten Cermet, einem Titannitrid-basierten Cermet, einem Titankarbonitrid-basierten Cermet, einem Niobkarbid-basierten Cermet, einem Niobkarbonitrid-basierten Cermet oder einem Niobnitrid-basierten Cermet gebildet. Neben verteilten Bereichen, die jeweils aus einer Mehrzahl von in dem zweiten metallischen Binder eingebetteten Hartstoffteilchen bestehen, können auch teilweise einzelne Hartstoffteilchen in der zusammenhängenden Phase eingebettet vorliegen.

Bei dem Verbundwerkstoff sind somit verteilte Bereiche aus einem Cermet in einer zusammenhängenden Phase aus Hartmetall eingebettet. Die eingebetteten verteilten Bereiche können derart ausgelegt werden, dass diese eine sehr große Härte aufweisen, die die Härte des umgebenden Hartmetalls deutlich übersteigt. Die zusammenhängende Phase aus Hartmetall kann andererseits aber ebenfalls bereits derart ausgelegt werden, dass eine hohe Verschleißbeständigkeit gegeben ist.

Wolframkarbid-basiertes Hartmetall ist ein Werkstoff, bei dem überwiegend durch Wolframkarbid gebildete harte Teilchen in einem duktilen metallischen Binder aus Co, Ni, Fe oder einer Basis-Legierung von diesen eingebettet sind. Basis-Legierung von Co, Ni oder Fe bedeutet, dass Co, Ni oder Fe Hauptbestandteil in Gew.-% der Legierung ist. Wolframkarbid bildet den überwiegenden Bestandteil in Gew.-% des Wolframkarbid-basierten Hartmetalls, insbesondere mehr als 70 Gew.-% des Hartmetalls. Neben Wolframkarbid können in geringeren Mengen auch weitere harte Teilchen in dem metallischen Binder eingebettet sein, insbesondere Karbide der Metalle der Gruppen IV bis VI des Periodensystems der Elemente. Der metallische Binder kann bevorzugt durch Co, Ni oder eine Basis-Legierung von diesen gebildet sein.

Unter Cermet wird in dem vorliegenden Kontext ein Ti-basiertes Hartmetall oder Nb-basiertes Hartmetall verstanden. Es gibt Titankarbid-basiertes Cermet, Titankarbonitrid-basiertes Cermet, Titannitrid-basiertes Cermet, Niobkarbid-basiertes Cermet, Niobkarbonitrid-basiertes Cermet und Niobnitrid-basiertes Cermet.

Titankarbid-basiertes Cermet (im Folgenden auch TiC-basiertes Cermet genannt) ist ein Werkstoff, bei dem überwiegend durch TiC (Titankarbid) gebildete Hartstoffteilchen in einem duktilen metallischen Binder aus Co, Ni, Fe oder einer Basis-Legierung von diesen eingebettet sind. Die TiC-Hartstoffteilchen weisen dabei üblicherweise eine Kern-Mantel-Struktur auf, bei der ein Kern aus TiC durch einen Mantel aus (Tiₐ, Me_{b}) C umgeben ist (wobei Me eines oder mehrere von insbesondere W, Mo, Cr, V, Ta und Nb sein kann). TiC bildet den überwiegenden Bestandteil in Gew.-% des TiC-basierten Cermets, bevorzugt mehr als 40 Gew.-% des Cermets. Neben TiC können in geringeren Mengen auch weitere Hartstoffteilchen in dem metallischen Binder eingebettet sein, insbesondere andere Karbide der Metalle der Gruppen IV bis VI, Ti(C, N) und TiN. Der metallische Binder kann bevorzugt durch Co, Ni oder eine Basis-Legierung von diesen gebildet sein.

Titankarbonitrid-basiertes Cermet (im Folgenden auch Ti(C, N)-basiertes Cermet genannt) ist ein Werkstoff, bei dem typischerweise überwiegend durch Ti(C, N) gebildete Hartstoffteilchen in einem duktilen metallischen Binder aus Co, Ni, Fe oder einer Basis-Legierung von diesen eingebettet sind.
Die Ti(C, N)-Hartstoffteilchen weisen dabei üblicherweise eine Kern-Mantel-Struktur auf, bei der ein Kern aus Ti(Cₓ, N_{y}) durch einen Mantel aus (Tiₐ, Me_{b}) (C_{z}, N_{q}) umgeben ist (wobei Me eines oder mehrere von insbesondere W, Mo, Cr, V, Ta und Nb sein kann).
Die Ti(C, N)-Hartstoffteilchen bilden den überwiegenden Bestandteil in Gew.-% des TiCN-basierten Cermets, bevorzugt mehr als 40 Gew.-% des Cermets. Neben Ti(C, N)-Hartstoffteilchen können auch weitere Hartstoffteilchen in dem metallischen Binder eingebettet sein, insbesondere Karbide der Metalle der Gruppen IV bis VI des Periodensystems der Elemente, TiC und TiN. Der metallische Binder kann bevorzugt durch Co, Ni oder eine Basis-Legierung von diesen gebildet sein. Es gibt jedoch auch andere Titankarbonitrid-basierte Cermets, bei denen keine durch Ti(C, N) gebildeten Hartstoffteilchen, sondern nur solche aus (Tiₐ, Me_{b}) (C_{z}, N_{q}), vorliegen und solche Cermets, bei denen (auch) große Mengen an TiC und/oder (Tiₐ, Me_{b})C vorliegen. Unter Titankarbonitrid-basiertem Cermet ist daher ein Cermet zu verstehen, das zumindest Ti(C, N) oder (Tiₐ, Me_{b}) (C_{z}, N_{q}) enthält und dessen Ti-Gehalt größer 30 Gew.-% ist.

Titannitrid-basiertes Cermet (im Folgenden auch TiN-basiertes Cermet genannt) ist ein Werkstoff, bei dem überwiegend durch TiN (Titannitrid) gebildete Hartstoffteilchen in einem duktilen metallischen Binder aus Co, Ni, Fe oder einer Basis-Legierung von diesen eingebettet sind. TiN bildet den überwiegenden Bestandteil in Gew.-% des TiN-basierten Cermets, bevorzugt mehr als 40 Gew.-% des Cermets. Neben TiN können in geringeren Mengen auch weitere Hartstoffteilchen in dem metallischen Binder eingebettet sein, insbesondere andere Karbide der Metalle der Gruppen IV bis VI, Ti(C, N) und TiC. Der metallische Binder kann bevorzugt durch Co, Ni oder eine Basis-Legierung von diesen gebildet sein.

Niobkarbid-basiertes Cermet (im Folgenden auch NbC-basiertes Cermet genannt) ist ein Werkstoff, bei dem überwiegend durch NbC (Niobkarbid) gebildete Hartstoffteilchen in einem duktilen metallischen Binder aus Co, Ni, Fe oder einer Basis-Legierung von diesen eingebettet sind. NbC bildet den überwiegenden Bestandteil in Gew.-% des NbC-basierten Cermets, bevorzugt mehr als 40 Gew.-% des Cermets. Neben NbC können in geringeren Mengen auch weitere Hartstoffteilchen in dem metallischen Binder eingebettet sein, insbesondere andere Karbide der Metalle der Gruppen IV bis VI, Nb(C, N) und NbN. Der metallische Binder kann bevorzugt durch
Co, Ni oder eine Basis-Legierung von diesen gebildet sein

Niobkarbonitrid-basiertes Cermet (im Folgenden auch Nb(C, N)-basiertes Cermet genannt) ist ein Werkstoff, bei dem überwiegend durch Nb(C, N) gebildete Hartstoffteilchen in einem duktilen metallischen Binder aus Co, Ni, Fe oder einer Basis-Legierung von diesen eingebettet sind.
Die Nb(C, N)-Hartstoffteilchen bilden den überwiegenden Bestandteil in Gew.-% des NbCN-basierten Cermets, bevorzugt mehr als 40 Gew.-% des Cermets. Neben Nb(C, N)-Hartstoffteilchen können auch weitere Hartstoffteilchen in dem metallischen Binder eingebettet sein, insbesondere Karbide der Metalle der Gruppen IV bis VI des Periodensystems der Elemente, NbC und NbN. Der metallische Binder kann bevorzugt durch Co, Ni oder eine Basis-Legierung von diesen gebildet sein.

Niobnitrid-basiertes Cermet (im Folgenden auch NbN-basiertes Cermet genannt) ist ein Werkstoff, bei dem überwiegend durch NbN (Nbnitrid) gebildete Hartstoffteilchen in einem duktilen metallischen Binder aus Co, Ni, Fe oder einer Basis-Legierung von diesen eingebettet sind. NbN bildet den überwiegenden Bestandteil in Gew.-% des NbN-basierten Cermets, bevorzugt mehr als 40 Gew.-% des Cermets. Neben NbN können in geringeren Mengen auch weitere Hartstoffteilchen in dem metallischen Binder eingebettet sein, insbesondere andere Karbide der Metalle der Gruppen IV bis VI, Nb(C, N) und NbC. Der metallische Binder kann bevorzugt durch Co, Ni oder eine Basis-Legierung von diesen gebildet sein.

Die Messung der angegebenen Vol.-% in Bezug auf die eingebetteten Bereiche des Cermets erfolgt wie folgt:

### Messung des Gesamt-Volumenanteils der verteilten Bereiche aus Cermet:

a. Es werden 10 nebeneinander stehende (ohne Überlappen, ohne Lücke) REM-BSE-Aufnahmen mit 10.000 Vergrößerung gemacht.
b. Auf jeder Aufnahme wird ein die ganze Aufnahme abdeckendes, gleichmäßiges rechtwinkliges Gitter mit 10 x 10 geraden Linien gezeichnet, sodass das ganze Gefüge in 81 gleiche Rechtecke eingeteilt ist.
c. Trennen eingebetteter Bereiche: Wenn zwei eingebettete verteilte Bereiche mit einer Brücke verbunden sind, deren Breite kleiner als 1 µm ist, werden die beiden Bereiche bei der engsten Stelle getrennt und die beiden Bereiche werden als zwei einzelne eingebettete verteilte Bereiche betrachtet. Wenn die Breite der engsten Stelle 1 µm oder größer ist, werden die beiden Bereiche als ein ganzer zusammenhängender verteilter Bereich betrachtet. Wenn ein verteilter Bereich einen dünnen Arm, dessen Breite < 1 µm ist, aufweist, wird der Arm von dem verteilten Bereich getrennt und als separater verteilter Bereich betrachtet.
d. Bestimmen des längsten und kürzesten Durchmessers Der längste/kürzeste Durchmesser eines eingebetteten verteilten Bereichs ist die längste/kürzeste Erstreckung eines eingebetteten verteilten Bereichs zwischen zwei parallelen Linien, sodass sich kein Teil des eingebetteten verteilten Bereichs außerhalb der Linien befindet.
e. Schnittlinienlänge messen: Die gesamte Schnittlinienlänge aller Gitterlinien mit eingebetteten Cermet-Bereichen jeglicher Größe und mit eingebetteten Einzel-Hartstoffteilchen von dem Cermet-Material wird gemessen. Die gesamte Schnittlinienlänge (d.h. die Summe der Schnittlinien mit den Cermet-Bereichen und den Einzel-Hartstoffteilchen) wird durch die gesamte Gitterlinienlänge (d.h. die Summe der Länge aller Gitterlinien) geteilt. Das Ergebnis mal 100 ist dann der Anteil der Cermet-Bereiche in Vol.-% von dieser Aufnahme. Der arithmetische Mittelwert von den 10 Aufnahmen (d.h. die Summe der Ergebnisse durch 10) ist dann der Gesamt-Volumenanteil der eingebetteten verteilten Cermet-Bereiche im untersuchten Verbundmaterial (in Vol.-%).

### Messung der Vol.-% der eingebetteten Cermet-Bereiche, die einen längsten

Durchmesser < 25 µm haben Es wird nach dem oben beschriebenen Verfahren jeweils auch die gesamte Schnittlinienlänge mit solchen eingebetteten Cermet-Bereichen gemessen, deren längster Durchmesser < 25 µm ist. Diese Schnittlinienlänge wird wiederum durch die gesamte Gitterlinienlänge geteilt. Das Ergebnis mal 100 ist dann der Anteil der Cermet-Bereiche mit einem längsten Durchmesser < 25 µm in Vol.-% von dieser Aufnahme. Ein Mittelwert von den 10 Aufnahmen ergibt den Volumenanteil der Cermet-Bereiche mit einem längsten Durchmesser < 25 µm im untersuchten Material.

Der ermittelte Volumenanteil der Cermet-Bereiche mit einem längsten Durchmesser < 25 µm wird durch den ermittelten Gesamt-Volumenanteil von Cermet-Bereichen geteilt. Das Ergebnis mal 100 ist dann der Volumenanteil (in Vol.-%) der eingebetteten Bereiche des Cermets, die einen längsten Durchmesser < 25 µm haben.

### Messung der Vol.-% der eingebetteten Cermet-Bereiche, die einen längsten Durchmesser von zumindest dem Dreifachen des mittleren Durchmessers der Wolframkarbid-Teilchen in der zusammenhängenden Phase haben

Der mittlere Durchmesser der Wolframkarbid-Teilchen in der zusammenhängenden Phase wird basierend auf einer EBSD-Messung nach ASTM E 2627 als mittlerer äquivalenter Durchmesser nach Flächenanteil bestimmt.

Es wird nach dem oben beschriebenen Verfahren jeweils auch die gesamte Schnittlinienlänge mit solchen eingebetteten Cermet-Bereichen gemessen, deren kürzester Durchmesser zumindest dem Dreifachen des ermittelten mittleren Durchmessers der Wolframkarbid-Teilchen entspricht. Diese Schnittlinienlänge wird wiederum durch die gesamte Gitterlinienlänge geteilt. Das Ergebnis mal 100 ist dann der Anteil der Cermet-Bereiche mit einem kürzesten Durchmesser von zumindest dem Dreifachen des ermittelten mittleren Durchmessers der Wolframkarbid-Teilchen von dieser Aufnahme in Vol.-%. Ein Mittelwert von den 10 Aufnahmen ergibt den Volumenanteil der Cermet-Bereiche mit einem kürzesten Durchmesser von zumindest dem Dreifachen des ermittelten mittleren Durchmessers der Wolframkarbid-Teilchen im untersuchten Material.

Der Volumenanteil der Cermet-Bereiche mit einem kürzesten Durchmesser von zumindest dem Dreifachen des ermittelten mittleren Durchmessers der Wolframkarbid-Teilchen wird durch den ermittelten Gesamt-Volumenanteil von Cermet-Bereichen geteilt. Das Ergebnis mal 100 ist dann der Volumenanteil (in Vol.-%) der eingebetteten Bereiche des Cermets, die einen kürzesten Durchmesser von zumindest dem Dreifachen des ermittelten mittleren Durchmessers der Wolframkarbid-Teilchen haben.

Gemäß einer Weiterbildung ist das Cermet ein Titankarbonitrid-basiertes Cermet. In diesem Fall werden besonders hohe Bruchzähigkeit und Biegebruchfestigkeit erreicht.

Zumindest 97 Vol.-% der eingebetteten Bereiche des Cermets haben einen längsten Durchmesser bevorzugt <15µm. In diesem Fall werden eine besonders hohe Bruchzähigkeit und eine besonders gute Biegebruchfestigkeit erreicht. Der jeweilige Volumenanteil ist dabei analog zu dem Verfahren zu ermitteln, das oben bezüglich der Cermet-Bereiche mit einem längsten Durchmesser < 25 µm µm beschrieben wurde.

Gemäß einer bevorzugten Weiterbildung machen die verteilten Bereiche insgesamt zwischen 5 Vol.-% und 50 Vol.-% des Verbundwerkstoffs aus. Bevorzugt machen sie zwischen 5 Vol.-% und 30 Vol.-% des Verbundwerkstoffs aus. In diesem Fall werden eine besonders hohe Bruchzähigkeit und Biegebruchfestigkeit bei gleichzeitig guter Verschleißbeständigkeit und geringer Verschweißneigung erreicht.

Gemäß einer Weiterbildung weisen zumindest 20 Vol.-% der eingebetteten Bereiche des Cermets zumindest 5 Hartstoffteilchen auf. In diesem Fall ist ein besonders vorteilhaftes Gefüge erreicht. Die Ermittlung des Volumenanteils erfolgt wiederum analog zu dem oben beschriebenen Verfahren, wobei der Volumenanteil der eingebetteten verteilten Bereiche mit zumindest fünf Hartstoffteilchen bestimmt und zu dem gesamten Volumenanteil der eingebetteten verteilten Bereiche ins Verhältnis gesetzt wird.

Gemäß einer Weiterbildung weist die zusammenhängende Phase auch eines oder mehrere Elemente von Cr, V, Mo, Ti, Nb, Ta, Zr, Hf mit einem Gesamtanteil von weniger als 10 Gew.-% der zusammenhängenden Phase auf. In diesem Fall können durch die gezielte Zugabe dieser Elemente die Eigenschaften des Hartmetall-Cermet-Verbundwerkstoffs an spezielle Anforderungen angepasst werden, z.B. um die Korrosionsbeständigkeit, die Härte, die Korngröße, etc. zu beeinflussen.

Gemäß einer Weiterbildung ist der metallische Binder der zusammenhängenden Phase überwiegend aus Co gebildet, mit einem Co-Gehalt im Bereich zwischen 4 - 30 Gew.-% der zusammenhängenden Phase. In diesem Fall kann ein besonders guter Kompromiss zwischen Duktilität und Härte des Hartmetall-Cermet-Verbundwerkstoffs erreicht werden. Der metallische Binder der zusammenhängenden Phase kann neben dem Hauptbestandteil Co auch noch weitere Elemente in geringeren Mengen aufweisen.

Gemäß einer Weiterbildung weist der zweite metallische Binder Co und/oder Ni als Hauptbestandteil auf. In diesem Fall werden besonders vorteilhafte Eigenschaften der eingebetteten verteilten Bereiche erzielt. Der zweite metallische Binder kann überwiegend aus Co oder überwiegend aus Ni bestehen und insbesondere auch gleichzeitig Co und Ni aufweisen, z.B. auch in gleichen Anteilen. Außer Co und Ni kann der zweite metallische Binder auch noch weitere Elemente in geringeren Mengen aufweisen.

Die Aufgabe wird auch durch ein Werkzeug zur zerspanenden Bearbeitung oder zur Umformung mit einem solchen Hartmetall-Cermet-Verbundwerkstoff gelöst.

Ferner wird die Aufgabe auch durch die Verwendung eines solchen Hartmetall-Cermet-Verbundwerkstoffs in einem Werkzeug zur zerspanenden Bearbeitung oder Umformung von Werkstoffen gelöst.

Die Aufgabe wird auch durch ein Verfahren zur Herstellung eines Hartmetall-Cermet-Verbundwerkstoffs gemäß Anspruch 11 gelöst. Vorteilhafte Weiterbildungen sind in den abhängigen Ansprüchen angegeben.

Mit dem beschriebenen Verfahren wird ein Hartmetall-Cermet-Verbundwerkstoff erzielt, der insbesondere für Werkzeuge für die zerspanende Bearbeitung und zur Umformung von Werkstoffen geeignet ist und eine verbesserte Bruchzähigkeit und Biegebruchfestigkeit bei gleichzeitig guter Verschleißbeständigkeit und geringer Verschweißneigung aufweist. Da das zugegebene Cermet-Granulat vor dem Mischen mit dem Ausgangspulver für das Wolframkarbid-basierte Hartmetall bereits teilgesintert oder vollgesintert ist, wird eine unerwünschte starke Binderdiffusion von dem Hartmetall zu dem Cermet vermieden. Unter vollgesintert wird dabei verstanden, dass die Partikel des Cermet-Granulats nahezu keine Rest-Porosität mehr aufweisen, wohingegen teilgesintert einen Zustand mit deutlich größerer Porosität der Partikel des Cermet-Granulats bezeichnet. Als Flüssigkeit, die als Flüssigphase zu dem Gemisch zugegeben wird, kommen die in der Hartmetallindustrie üblichen Flüssigkeiten in Betracht, insbesondere Alkohole, Aceton oder Wasser. Das Trocknen des Gemischs kann insbesondere in allgemein bekannter Weise in einem Sprühturm erfolgen, es sind aber auch andere Trocknungsverfahren möglich, z.B. in einem Rotationsverdampfer. Insbesondere die angegebene kleine Teilchengröße D(0.97) des Cermet-Granulats ermöglicht die Ausbildung eines besonders vorteilhaften Gefüges des Hartmetall-Cermet-Verbundwerkstoffs. Das Formen des Hartmetall-Cermet-Verbund-Granulats oder -Pulvers kann in der in der Hartmetall-Industrie üblichen Weise z.B. durch Direktpressen, Strangpressen, kaltisostatisches Pressen, Spritzgießen (Injection Molding) und ähnliche formgebende Verfahren erfolgen.

Gemäß einer Weiterbildung weist das Ausgangspulver für das Wolframkarbid-basierte Hartmetall Ausgangspulver für den metallischen Binder und Wolframkarbid-Pulver auf. In diesem Fall werden die Ausgangsmaterialien für das Wolframkarbid-basierte Hartmetall somit nicht bereits als Hartmetall-Granulat sondern stattdessen getrennt dem Schritt des Mischens zugeführt. In Verbindung mit dem teilgesinterten oder vollgesinterten Cermet-Granulat stellt sich somit eine besonders vorteilhaftes Gefüge des resultierenden Hartmetall-Cermet-Verbundwerkstoffs ein.

Gemäß der Erfindung haben zumindest 20 Vol.-% der Teilchen des Cermet-Granulats eine Partikelgröße von zumindest dem Dreifachen des mittleren Durchmessers der Wolframkarbid-Teilchen in dem Hartmetall-Cermet-Verbundwerkstoff. In diesem Fall wird ein besonders vorteilhaftes Gefüge erreicht. Der mittlere Durchmesser der Wolframkarbid-Teilchen ist in dem resultierenden Hartmetall-Cermet-Verbundwerkstoff zu bestimmen, wie oben angegeben wurde. Die Partikelgröße der Teilchen des Cermet-Granulats wird mittels Laser nach DIN ISO 13320-1 gemessen.
Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung des Gefüges eines Hartmetall-Cermet-Verbundwerkstoffs gemäß einer Ausführungsform;
- Fig. 2:: einen Ausschnitt aus einer REM-Aufnahme mit 10.000-facher Vergrößerung eines Hartmetall-Cermet-Verbundwerkstoffs gemäß einem Beispiel;
- Fig. 3:: eine REM-Aufnahme mit 5.000-facher Vergrößerung eines Hartmetall-Cermet-Verbundwerkstoffs gemäß einem weiteren Beispiel; und
- Fig. 4:: eine lichtmikroskopische Aufnahme des Hartmetall-Cermet-Verbundwerkstoffs gemäß dem weiteren Beispiel.

### Ausführungsbeispiele

Zur Herstellung eines Hartmetall-Cermet-Verbundwerkstoffs wird ein Cermet-Granulat in einem pulvermetallurgischen Herstellungsverfahren aus Ausgangspulver für Hartstoffteilchen und Ausgangspulver für einen (zweiten) metallischen Binder hergestellt. Das Massenverhältnis wird dabei derart gewählt, dass ein Anteil des (zweiten) metallischen Binders im Bereich von 1-30 Gew.-% resultiert. Das Ausgangspulver für die Hartstoffteilchen besteht dabei zumindest überwiegend aus Titankarbid-Partikeln (TiC), Titannitrid-Partikeln (TiN), Titankarbonitrid-Partikeln (TiCN), Niobkarbid-Partikeln (NbC), Niobkarbonitrid-Partikeln (NbCN) oder Niobnitrid-Partikeln (NbN), bevorzugt überwiegend aus Titankarbonitrid-Partikeln, und kann ferner aber auch weitere Hartstoffteilchen in geringeren Mengen aufweisen. Das Ausgangspulver für den metallischen Binder weist Co und/oder Ni und/oder Fe als Hauptbestandteile auf, sodass der resultierende Binder Co, Ni, Fe oder eine Legierung von diesen aufweist, bevorzugt Co und/oder Ni als Hauptbestandteil.

Die Ausgangspulver für das Cermet-Granulat werden in der üblichen Weise gemischt, ggfs. unter Beigabe einer Flüssigphase, und getrocknet, wobei das Trocken insbesondere durch Sprühtrocknen erfolgen kann. Anschließend erfolgt eine vollständige Sinterung oder zumindest eine teilweise Sinterung, um das gewünschte Cermet auszubilden. In einem folgenden Schritt wird das vollgesinterte oder teilgesinterte Cermet durch Zerkleinern und/oder Sichten zu dem gewünschten Cermet-Granulat verarbeitet. Das Cermet-Granulat wird dabei derart aufbereitet, dass die Teilchen des Cermet-Granulats eine nach DIN ISO 13320-1 (Fraunhofer-Modell) gemessene Teilchengröße D(0.97) < 25 µm, bevorzugt < 15 µm.

Anstelle der beschriebenen Herstellungsroutine kann auch ein kommerziell erhältliches Cermet-Granulat mit diesen Eigenschaften verwendet werden.

Das teilgesinterte oder vollgesinterte Cermet-Granulat wird mit Ausgangspulver für ein Wolframkarbid-basiertes Hartmetall, das einen metallischen Binder und Wolframkarbid (WC) aufweist, vermischt. Der metallische Binder des Wolframkarbid-basierten Hartmetalls weist Co, Ni, Fe oder eine Legierung von diesen auf, bevorzugt Co oder eine Co-Legierung mit Co als Hauptbestandteil. Das Massenverhältnis für das Wolframkarbid-basierte Hartmetall ist bevorzugt derart gewählt, dass der Co-Gehalt im Bereich von 4-30 Gew.-% des Hartmetalls liegt. Das Ausgangspulver für das Wolframkarbid-basierte Hartmetall kann insbesondere auch eines oder mehrere von Cr, V, Mo,
Ti, Nb, Ta, Zr, Hf mit einem Gesamtanteil von weniger als 10 Gew.-% des Wolframkarbid-basierten Hartmetalls aufweisen. Als Ausgangspulver für das Wolframkarbid-basierte Hartmetall können dabei separat Wolframkarbid-Pulver und Ausgangspulver für den metallischen Binder verwendet werden oder es kann bereits ein vorgemischtes Pulver zum Einsatz kommen, das bereits sowohl die Materialien für den Binder als auch Wolframkarbid-Teilchen aufweist.

Das Mischen des Ausgangspulvers für das Wolframkarbid-basierte Hartmetall und des Cermet-Granulats erfolgt unter Zufügung einer Flüssigkeit als Flüssigphase. Die Flüssigkeit kann dabei insbesondere durch Wasser oder einen Alkohol gebildet sein. Das Mischen kann z.B. in der üblichen Weise in einem Attritor und/oder einem Mischaggregat erfolgen. Anschließend wird das derart erzeugte Gemisch durch Trocknen zu einem Hartmetall-Cermet-Verbund-Granulat oder -Pulver weiterverarbeitet, was z.B. durch Sprühtrocknen in einem Sprühturm erfolgen kann, wie sie in der Hartmetallindustrie üblicherweise zum Einsatz kommen.

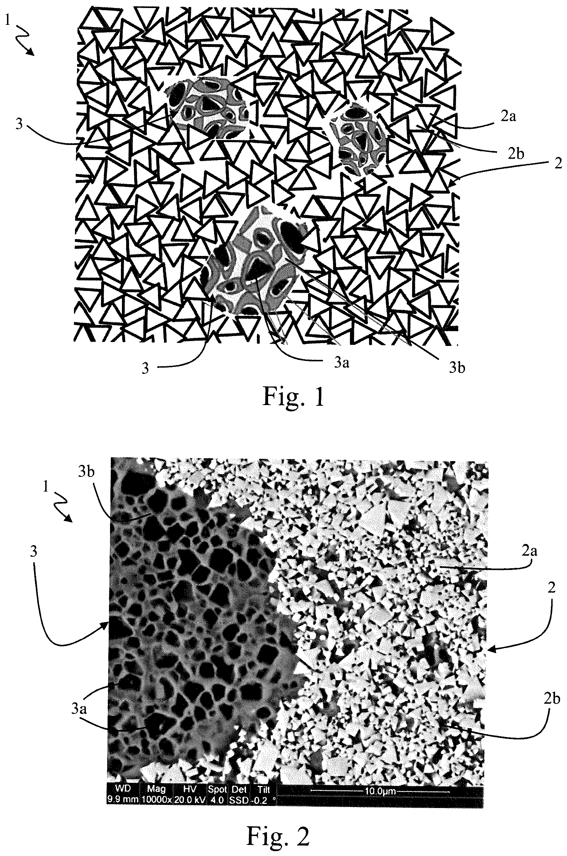

Durch Formen, wie z.B. durch Direktpressen, Strangpressen, kaltisostatisches Pressen oder Spritzgießen (Injection Molding), und anschließendes Sintern wird das Hartmetall-Cermet-Verbund-Granulat oder -Pulver anschließend zu dem Hartmetall-Cermet-Verbundwerkstoff 1 verarbeitet. Der erzielte Hartmetall-Cermet-Verbundwerkstoff 1 ist in Fig. 1 schematisch dargestellt. Wie in Fig. 1 zu sehen ist, weist der Hartmetall-Cermet-Verbundwerkstoff 1 eine zusammenhängende Phase 2 aus Wolframkarbid-basiertem Hartmetall auf, die den metallischen Binder 2b und darin eingebettete Wolframkarbid-Teilchen 2a aufweist. In der zusammenhängenden Phase 2 aus Hartmetall sind Bereiche 3 des Titankarbid-, Titannitrid-, Titankarbonitrid-, Niobkarbid-, Niobkarbonitrid- oder Niobnitrid-basierten Cermets eingebettet, die einen zweiten metallischen Binder 3b und in dem zweiten metallischen Binder 3b eingebettete Hartstoffteilchen 3a aufweisen. Wie in Fig. 1 schematisch dargestellt ist, weisen die eingebetteten Hartstoffteilchen 3a der Cermet-Bereiche 3 zumindest im Fall von Titan-basierten Hartstoffteilchen eine typische Kern-Mantel-Struktur auf, wie sie eingangs beschrieben wurde.

Bei dem Herstellen des Gemischs für das Hartmetall-Cermet-Verbund-Granulat oder -Pulver wird darauf geachtet, dass die Partikel des zugefügten teilgesinterten oder vollgesinterten Cermet-Granulats nicht zu stark zerkleinert werden. Dadurch wird erreicht, dass zumindest 20 Vol.-% der eingebetteten verteilten Bereiche 3 des Cermets einen kürzesten Durchmesser von zumindest dem Dreifachen des mittleren Durchmessers der Wolframkarbid-Teilchen 2a in der zusammenhängenden Phase 2 aus Wolframkarbid-basiertem Hartmetall haben und dass zumindest 20 Vol.-% der eingebetteten verteilten Bereiche 3 zumindest fünf Hartstoffteilchen aufweisen.

Das Massenverhältnis zwischen dem teilgesinterten oder vollgesinterten Cermet-Granulat und dem Ausgangspulver für das Wolframkarbid-basierte Hartmetall wird derart gewählt, dass die eingebetteten verteilten Bereiche 3 des Cermets bei dem Hartmetall-Cermet-Verbundwerkstoff 1 zwischen 5 Vol.-% und 50 Vol.-% bilden, bevorzugt zwischen 5 Vol.-% und 30 Vol.-%. Bei einem geringeren Anteil der Cermet-Bereiche 3 können die gewünschten Vorteile bezüglich der Verschleißbeständigkeit gegenüber herkömmlichem Hartmetall nicht erreicht werden. Bei einem zu hohen Anteil der eingebetteten verteilten Bereiche 3 können die gewünschte niedrige Porosität und die gewünschte hohe Biegebruchfestigkeit nicht mehr erreicht werden.
Bei dem erzeugten Hartmetall-Cermet-Verbundwerkstoff 1 haben zumindest 97 Vol.-% der eingebetteten verteilten Cermet-Bereiche 3 einen längsten Durchmesser, der kleiner als 25 µm beträgt. Es hat sich gezeigt, dass die gewünschte hohe Biegebruchfestigkeit nur in den Fällen erzielt wurde, in denen zumindest 97 Vol.-% der eingebetteten verteilten Bereiche 3 des Cermets einen längsten Durchmesser < 25 µm hatten, also die Cermet-Bereiche 3 nicht zu groß waren, und andererseits aber zumindest 20 Vol.-% der eingebetteten verteilten Bereiche 3 des Cermets einen kürzesten Durchmesser von zumindest dem Dreifachen des mittleren Durchmessers der Wolframkarbid-Teilchen 2a in der zusammenhängenden Phase 2 hatten, also eine ausreichend große Anzahl an hinreichend großen Cermet-Bereichen 3 vorhanden war, die sich deutlich von der zusammenhängenden Phase 2 des Wolframkarbid-basierten Hartmetalls abhoben.

Der erzeugte Hartmetall-Cermet-Verbundwerkstoff 1 mit der zusammenhängenden Phase 2 aus Wolframkarbid-basiertem Hartmetall und den darin eingebetteten Cermet-Bereichen 3 hat den Vorteil, dass die besonders verschleißfesten Cermet-Bereiche 3 nicht gleich abgetragen werden können, wenn die zäheren und weniger verschleißfesten Bereiche der zusammenhängenden Phase 2 durch Verschleiß abgetragen werden. Verglichen mit einzelnen verschleißfesten Titankarbid-, Titannitrid-, Titankarbonitrid-, Niobkarbid-, Niobkarbonitrid- oder Niobnitrid-Körnern, die bei einem Verschleiß einer sie umgebenden zusammenhängenden Phase auch schnell abgetragen würden, weisen die eingebetteten Cermet-Bereiche 3 wegen einer gegenseitigen Unterstützung der Hartstoffteilchen eine deutlich größere Beständigkeit auf.

Aus dem beschriebenen Hartmetall-Cermet-Verbundwerkstoff 1 können bevorzugt Werkzeuge zur zerspanenden Bearbeitung, wie insbesondere Bohrer, Fräser, Reibahlen, etc. oder Werkzeuge zum Umformen gefertigt werden. Insbesondere bei Werkzeugen zur zerspanenden Bearbeitung kann die Oberfläche des Hartmetall-Cermet-Verbundwerkstoffes z.B. durch Bürsten, Schleppschleifen, Strahlen, Schleifen mit einer relativ weichen Schleifscheibe oder Ätzen bearbeitet werden, um die eingebetteten verschleißfesteren Cermet-Bereiche 3 freizulegen. In diesem Fall gelangen dann zumindest überwiegend nur die harten diffusionsträgen Cermet-Bereiche 3 in Kontakt mit dem zu bearbeitenden Werkstück, sodass eine geringe Reibung und eine niedrige Diffusionsneigung erreicht werden. Ferner ermöglicht ein solches Freilegen der eingebetteten Cermet-Bereiche 3 aufgrund der Zwischenräume zwischen den Cermet-Bereichen 3 eine verbesserte Benetzung mit Kühl- und/oder Schmiermittel.

Der Hartmetall-Cermet-Verbundwerkstoff 1 kann dabei z.B. bei Vollmaterial-Werkzeugen für die Zerspanung, auswechselbaren Schneideinsätzen für die Zerspanung und Verschleißteilen zur Anwendung kommen. Es ist ferner möglich, den Hartmetall-Cermet-Verbundwerkstoff noch mit einer Beschichtung zu versehen (durch ein CVD- oder PVD-Verfahren), um die Eigenschaften weiter zu verbessern.

### Beispiel 1

Cermet-Granulat eines Titankarbonitrid-basierten Cermets wurde aus Pulvern von TiCN, Mo₂C, WC, Co und Ni mit den folgenden Verhältnissen in Gewichtsprozent gefertigt: 42,7 Gew.-% Ti, 14,3 Gew.-% Mo, 10,4 Gew.-% W, 8,7 Gew.-% Co, 5,4 Gew.-% Ni, 12,3 Gew.-% C und 6,2 Gew.-% N. Die Pulver für das Cermet-Granulat wurden in einem pulvermetallurgischen Herstellungsverfahren in der üblichen Weise gemischt, getrocknet und zu Plättchen gepresst. Anschließend wurden die derart gepressten Plättchen bei 1460°C vollgesintert. Anschließend wurden durch Zerkleinern und Sieben (mit Sieben mit Maschenweiten von 25 µm, 40 µm und 71 µm) drei verschiedene Cermet-Granulate mit Partikelgrößen von < 25 µm, zwischen 25 µm und 40 µm, sowie zwischen 40 µm und 71 µm hergestellt.

Wolframkarbidpulver mit einer mittleren Partikelgröße im Submikron-Bereich, d.h. zwischen 0,5 µm und 0,8 µm, und Co-Pulver wurden als Ausgangspulver für ein Wolframkarbid-basiertes Hartmetall verwendet. Es wurden dabei Mischungsverhältnisse für ein WC-10Co-Hartmetall (d.h. für ein Hartmetall mit 10 Gew.-% Co, Rest WC) und für ein WC-15Co-Hartmetall (d.h. für ein Hartmetall mit 15 Gew.-% Co, Rest WC) eingestellt.

Das jeweilige Ausgangspulver für das Hartmetall wurde mit dem Cermet-Granulat unter Zugabe von Wasser als Flüssigphase in einem Attritor (Rührwerkskugelmühle) vermischt. Dabei wurden die aus der folgenden Tabelle 1 ersichtlichen Mischungen hergestellt. In Tabelle 1 sind die Proben wie folgt bezeichnet: xxCo/yy Vol.-%/Partikelgröße. 15Co bezeichnet das Ausgangspulververhältnis von WC-Pulver und Co-Pulver für ein WC-15Co-Hartmetall, 10Co bezeichnet das Ausgangspulververhältnis von WC-Pulver und Co-Pulver für ein WC-10Co-Hartmetall. 15 Vol.-% bedeutet, dass eine Mischung aus 85 Vol.-% Ausgangspulver für das Hartmetall und 15 Vol.-% Cermet-Granulat erstellt wurde; 25 Vol.-% bedeutet, dass eine Mischung aus 75 Vol.-% Ausgangspulver für das Hartmetall und 25 Vol.-% Cermet-Granulat erstellt wurde. Die letzte Stelle bezeichnet die Partikelgröße des verwendeten Cermet-Granulats (< 25 µm, 25-40 µm oder 40-71 µm).

Anschließend wurde das jeweilige Gemisch in der üblichen Weise in einem Sprühturm sprühgetrocknet, um ein Hartmetall-Cermet-Verbund-Granulat mit der jeweiligen Zusammensetzung bereitzustellen.

**TABELLE 1**

| Probe | rel. Dichte [%] | HV30 | K1c [MPa·m^{1/2}] | TRS [MPa] |
|---|---|---|---|---|
| 10Co/15 Vol.-%/<25 µm | 99,9 | 1621 | 11,2 | 1596 |
| 15Co/15 Vol.-%/<25 µm | 99,4 | 1454 | 13,6 | 1910 |
| 10Co/25 Vol.-%/<25 µm | 99,9 | 1645 | 10,5 | 1521 |
| 15Co/25 Vol.-%/<25 µm | 99,4 | 1471 | 12,6 | 1958 |
| 1OCo/15 Vol.-%/25-40 µm | 99,7 | 1635 | 11,3 | 1422 |
| 15Co/15 Vol.-%/25-40 µm | 99,2 | 1446 | 13,8 | 1638 |
| 10Co/25 Vol.-%/25-40 µm | 100 | 1649 | 10,5 | 1317 |
| 15Co/25 Vol.-%/25-40 µm | 99,3 | 1471 | 13,5 | 1628 |
| 10Co/15 Vol.-%/40-71 µm | 99,5 | 1625 | 11,4 | 1050 |
| 15Co/15 Vol.-%/40-71 µm | 98,1 | 1459 | 16,4 | 1341 |

Das Hartmetall-Cermet-Verbund-Granulat wurde jeweils zu Plättchen gepresst, die anschließend bei 1400°C vollständig zu einem

Hartmetall-Cermet-Verbundwerkstoff 1 gesintert wurden. Der derart hergestellte Hartmetall-Cermet-Verbundwerkstoff 1 wurde in Bezug auf die relative Dichte, Härte (HV30 nach DIN EN ISO 3878)), Biegebruchfestigkeit TRS (entsprechend DIN EN ISO 3327) und Bruchzähigkeit (K1c nach der Palmquist-Methode (Shetty-Formel) untersucht und die erzielten Ergebnisse sind in Tabelle 1 ersichtlich.

Es ist zu erkennen, dass jeweils eine sehr hohe relative Dichte von nahe 100 % erzielt wurde. Ferner ist in der Tabelle deutlich zu erkennen, dass die Partikelgröße des verwendeten Cermet-Granulats einerseits nur einen relativ geringen Einfluss auf die erreichte Härte (HV30) und die Bruchzähigkeit (K1c) hat, andererseits die erreichte Biegebruchfestigkeit TRS mit abnehmender Partikelgröße des verwendeten Cermet-Granulats signifikant zunimmt. Mit den Proben, bei denen das Cermet-Granulat mit der größten Partikelgröße zum Einsatz kam (d.h. den letzten beiden Proben in Tabelle 1) wurden auch mit dem relativ geringen Volumenanteil des Cermet-Granulats keine ausreichend hohe Biegebruchfestigkeit mehr erzielt. Es ist zu beachten, dass die Größe der eingebetteten verteilten Bereiche 3 des Cermets in dem Hartmetall-Cermet-Verbundwerkstoff 1 nicht unmittelbar der Partikelgröße des verwendeten Cermet-Granulates entspricht, da bei dem Mischen zum Erzeugen des Hartmetall-Cermet-Verbund-Granulats zwangsläufig eine teilweise Zerkleinerung der Cermet-Partikel erfolgt.

Es wurden ferner REM-Untersuchungen durchgeführt, aus denen sich ergibt, dass der erzeugte Hartmetall-Cermet-Verbundwerkstoff 1 jeweils eine zusammenhängende Phase 2 aus Wolframkarbid-basiertem Hartmetall und in dieser zusammenhängenden Phase 2 eingebettete verteilte Bereiche 3 aus Cermet aufweist. Ein Ausschnitt einer REM-Aufnahme bei 10.000-facher Vergrößerung der zweiten Probe (15Co/15 Vol.-%/<25 µm) aus Tabelle 1 ist in Fig. 2 zu sehen. Es ist deutlich zu erkennen, dass die verteilten Bereiche 3 aus Cermet gut von der zusammenhängenden Phase 2 des Wolframkarbid-basierten Hartmetalls zu unterscheiden sind. Ferner sind im Bereich der zusammenhängenden Phase 2 gut die (hellen) Wolframkarbid-Teilchen 2a zu erkennen, die in dem (dunklen) metallischen Binder 2b eingebettet sind. Eingehendere REM-Untersuchungen (REM-EDX) haben ferner ergeben, dass eine Kobaltmigration von den verteilten Bereichen 3 zu der zusammenhängenden Phase 2 beim Sintern stattgefunden hat, sodass bei dem Hartmetall-Cermet-Verbundwerkstoff 1 ein großer Kobalt-Konzentrationsunterschied zwischen den eingebetteten verteilten Bereichen 3 aus Cermet und der zusammenhängenden Phase 2 aus Wolframkarbid-basiertem Hartmetall erreicht wurde. Im Falle von WC-10Co für die zusammenhängende Phase 2 wurde nur ein Kobalt-Gehalt von etwa 2 Gew.-% in den eingebetteten Cermet-Bereichen 3 gemessen, im Falle von WC-15Co etwa 4 Gew.-%. Andererseits weist die zusammenhängende Phase 2 aus Wolframkarbid-basiertem Hartmetall bei dem Hartmetall-Cermet-Verbundwerkstoff 1 nur einen sehr geringen Ti-Gehalt auf, wodurch sich die gute Bruchzähigkeit des Hartmetall-Cermet-Verbundwerkstoffs 1 erklären lässt. Die Ergebnisse der Analyse mittels REM-EDX sind in der nachfolgenden Tabelle 2 zusammengefasst:

**TABELLE 2**

| Probe | | Co-Gehalt [Gew.-%] | Ti-Gehalt [Gew.-%] |
|---|---|---|---|
| WC-10Co | verteilte Bereiche | 0-2 | 39 |
| | zus. Phase | 9 | 0,4 |
| WC-15Co | verteilte Bereiche | 3-4 | 35-38 |
| | zus. Phase | 13-14 | 1-2 |

Separate Untersuchungen der eingebetteten verteilten Bereiche 3 und der zusammenhängenden Phase 2 haben ferner ergeben, dass die eingebetteten verteilten Bereiche 3 aus Cermet eine große Härte von 2380 HV1 (im Falle von WC-10Co für die zusammenhängende Phase 2) bzw. 2125 HV1 (im Falle von WC-15Co) aufweisen, während die zusammenhängende Phase 2 aus Hartmetall eine deutlich geringere Härte von 1610 HV1 (bei WC-10Co) bzw. 1412 HV1 (bei WC-15Co) aufweist.

### Beispiel 2

Es wurden Hartmetall-Cermet-Verbundwerkstoffe 1 im Wesentlichen wie bei Beispiel 1 hergestellt, allerdings mit dem Unterschied, dass bei der Herstellung des Cermet-Granulats anstelle des Vollsinterns bei 1460°C nur ein Teilsintern bei 1000°C vorgenommen wurde, sodass das jeweilige zum Einsatz kommende Cermet-Granulat jeweils nur teilgesintert war. Die restlichen Schritte wurden wie bei Beispiel 1 durchgeführt.

Eine eingehendere Untersuchung mittels REM-EDX hat ergeben, dass in diesem Fall eines nur teilgesinterten Cermet-Granulates bei der Herstellung des Hartmetall-Cermet-Verbundwerkstoffes 1 bei dem größeren Kobalt-Anteil für die zusammenhängende Phase 2 (d.h. WC-15Co) Kobalt in die eingebetteten verteilten Bereiche migriert, sodass die eingebetteten verteilten Bereiche 3 aus Cermet einen höheren Kobalt-Gehalt aufweisen. In dem Fall von WC-10Co migriert hingegen Kobalt von den eingebetteten verteilten Bereichen in die zusammenhängende Phase. Die Ergebnisse der Untersuchung sind in der nachfolgenden Tabelle 3 zusammengefasst.

**TABELLE 3**

| Probe | | Co-Gehalt [Gew.-%] | Ti-Gehalt [Gew.-%] |
|---|---|---|---|
| WC-10Co | verteilte Bereiche | 0-1,6 | 31-38 |
| | zus. Phase | 10-11 | 0,5-0,6 |
| WC-15Co | verteilte Bereiche | 9-10 | 33 |
| | zus. Phase | 14-15 | 0-0,3 |

Es kann folglich durch Variation des Sinterprozesses bei der Herstellung des Cermet-Granulats, insbesondere durch eine Variation der Temperatur bzw. des Ausmaßes der Sinterung, der Gehalt des metallischen Binders in den eingebetteten verteilten Bereichen 3 eingestellt werden. Mit anderen Worten kann über diesen Prozess die Härte der eingebetteten verteilten Bereiche 3 eingestellt werden. Bei den Hartmetall-Cermet-Verbundwerkstoffen 1 gemäß dem zweiten Beispiel wurden Härten der eingebetteten verteilten Bereiche von 2281 HV1 (im Falle von WC-10Co) bzw. 2053 HV1 (im Falle von WC-15Co) gemessen.

### Beispiel 3

Cermet-Granulat eines Niobkarbid-basierten Cermets wurde aus Pulvern von NbC, WC und Co mit den folgenden Verhältnissen in Gewichtsprozent gefertigt: 60 Gew.-% NbC, 30 Gew.-% WC und 10 Gew.-% Co. Die Pulver für das Cermet-Granulat wurden in einem Attritor gemahlen, in einem Rotationsverdampfer getrocknet, zerkleinert und auf < 250 µm gesiebt. Anschließend wurde das Granulat bei 1360°C vollgesintert und es wurden durch Zerkleinern und Sieben (Maschenweiten von 25 µm, 71 µm und 140 µm) drei verschiedene Cermet-Granulate mit Partikelgrößen von < 25 µm, zwischen 25 µm und 71 µm, sowie zwischen 71 µm und 140 µm hergestellt.

Wolframkarbidpulver mit einer mittleren Partikelgröße im Submikron-Bereich, d.h. zwischen 0,5 µm und 0,8 µm, und Co-Pulver wurden als Ausgangspulver für ein Wolframkarbid-basiertes Hartmetall verwendet. Es wurden dabei Mischungsverhältnisse für ein WC-12Co-Hartmetall (d.h. für ein Hartmetall mit 12 Gew.-% Co, Rest WC) eingestellt. Das jeweilige Ausgangspulver für das Hartmetall wurde mit Zugabe von Paraffin und Petrolether in einem Attritor (Rührwerkskugelmühle) gemahlen. Danach wurde das Cermet-Granulat zu dem WC-Co Gemisch zugegeben und in einem Mixer für 30 Minuten vermischt. Dabei wurden die aus der folgenden Tabelle 4 ersichtlichen Mischungen hergestellt. In Tabelle 4 sind die Proben wie folgt bezeichnet: xxCo/yy Cermet/Partikelgröße. 12Co bezeichnet das Ausgangspulververhältnis von WC-Pulver und Co-Pulver für ein WC-12Co-Hartmetall. 10 Cermet bedeutet, dass eine Mischung aus 90 wt% Ausgangspulver für das Hartmetall und 10 wt% Cermet-Granulat erstellt wurde. Die letzte Stelle bezeichnet die Partikelgröße des verwendeten Cermet-Granulats (< 25 µm, 25-71 µm oder 71-140 µm). Anschließend wurde das jeweilige Gemisch in einem Rotationsverdampfer getrocknet, zerkleinert und auf <250 µm gesiebt, zu Plättchen gepresst und bei 1400°C gesintert.

**TABELLE 4**

| Probe | HV30 | K1c [Mpa·m^{1/2}] | TRS [MPa] |
|---|---|---|---|
| 12Co/10 Cermet/< 25 µm | 1629 | 10,2 | 1747 |
| 12Co/10 Cermet/25 -71 µm | 1612 | 9,8 | 1299 |
| 12Co/10 Cermet/71 - 140 µm | 1639 | 10,3 | 1249 |

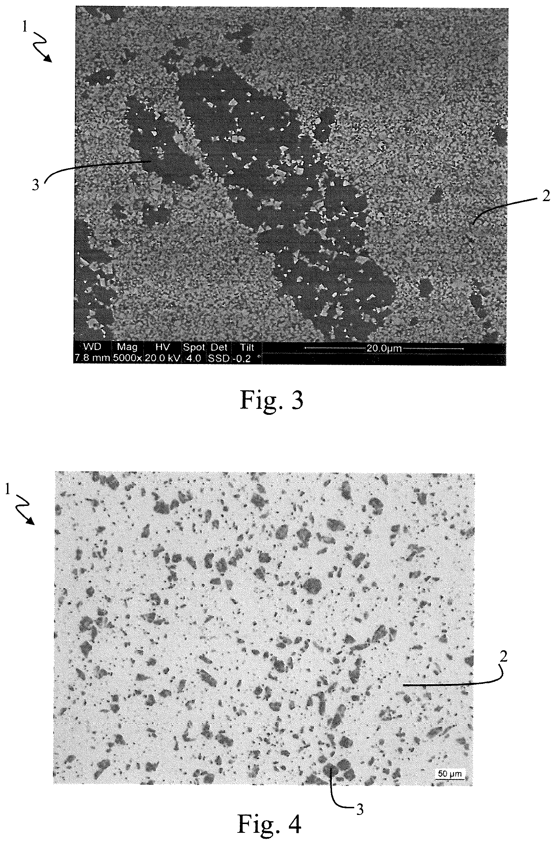

Der derart hergestellte Hartmetall-Cermet-Verbundwerkstoff wurde in Bezug auf Härte (HV30 nach DIN EN ISO 3878), Biegebruchfestigkeit TRS (entsprechend DIN EN ISO20 3327) und Bruchzähigkeit (K1c nach der Palmquist-Methode (Shetty-Formel)) untersucht und die erzielten Ergebnisse sind in Tabelle 4 ersichtlich. Es ist zu erkennen, dass die Partikelgröße des verwendeten Cermet-Granulats einerseits nur einen relativ geringen Einfluss auf die erreichte Härte (HV30) und die Bruchzähigkeit (K1c) hat, andererseits die erreichte Biegebruchfestigkeit TRS mit abnehmender Partikelgröße des verwendeten Cermet-Granulats signifikant zunimmt. Es wurden ferner Lichtmikroskopie- und REM-Untersuchungen durchgeführt, aus denen sich ergibt, dass der erzeugte Hartmetall-Cermet-Verbundwerkstoff 1 jeweils eine zusammenhängende Phase 2 aus Wolframkarbid-basiertem Hartmetall und in dieser zusammenhängenden Phase 2 eingebettete verteilte Bereiche 3 aus NbC-Cermet aufweist. Ein Ausschnitt einer REM-Aufnahme bei 5.000-facher Vergrößerung der ersten Probe (12Co/10 Cermet/<25 µm) aus Tabelle 4 ist in Fig. 3 zu sehen. Es ist deutlich zu erkennen, dass die verteilten Bereiche 3 aus Cermet gut von der zusammenhängenden Phase 2 des Wolframkarbidbasierten Hartmetalls zu unterscheiden sind. Abb. 4 zeigt eine lichtmikroskopische Aufnahme der ersten Probe, die nach einem Polieren kurz mit Murakami-Lösung geätzt wurde.

Eingehendere REM-Untersuchungen (REM-EDX) haben ferner ergeben, dass eine Kobaltmigration von den verteilten Bereichen 3 zu der zusammenhängenden Phase 2 beim Sintern stattgefunden hat, sodass bei dem Hartmetall-Cermet-Verbundwerkstoff 1 ein großer Kobalt-Konzentrationsunterschied zwischen den eingebetteten verteilten Bereichen 3 aus Cermet und der zusammenhängenden Phase 2 aus Wolframkarbid-basiertem Hartmetall erreicht wurde. Ein Kobalt-Gehalt von etwa 0,5 - 1,2 Gew.-% in den eingebetteten Cermet-Bereichen 3 gemessen.

## Patentansprüche

1. Hartmetall-Cermet-Verbundwerkstoff (1) bestehend aus:
einer zusammenhängenden Phase (2) aus Wolframkarbid-basiertem Hartmetall, die einen metallischen Binder (2b) aus Co, Ni, Fe oder einer Legierung von diesen und in dem metallischen Binder (2b) eingebettete Wolframkarbid-Teilchen (2a) aufweist, und
in der zusammenhängenden Phase (2) eingebetteten verteilten Bereichen (3) eines Titankarbid-, Titannitrid-, Titankarbonitrid-, Niobkarbid-, Niobkarbonitrid- oder Niobnitrid-basierten Cermets, die einen zweiten metallischen Binder (3b) aus Co, Ni, Fe oder einer Legierung von diesen und in dem zweiten metallischen Binder (3b) eingebettete Hartstoffteilchen (3a) aufweisen,
**dadurch gekennzeichnet, dass**
zumindest 97 Vol.-% der eingebetteten verteilten Bereiche (3) des Cermets einen längsten Durchmesser <25 µm haben und
zumindest 20 Vol.-% der eingebetteten verteilten Bereiche (3) des Cermets einen kürzesten Durchmesser von zumindest dem Dreifachen des mittleren Durchmessers der Wolframkarbid-Teilchen (2a) in der zusammenhängenden Phase (2) haben,
wobei die Vol.-% wie in der Beschreibung angegeben zu bestimmen sind.

2. Hartmetall-Cermet-Verbundwerkstoff (1) nach Anspruch 1, wobei das Cermet ein Titankarbonitrid-basiertes Cermet ist.

3. Hartmetall-Cermet-Verbundwerkstoff nach einem der vorangehenden Ansprüche, wobei zumindest 97 Vol.-% der eingebetteten Bereiche (3) des Cermets einen längsten Durchmesser <15µm haben.

4. Hartmetall-Cermet-Verbundwerkstoff nach einem der vorangehenden Ansprüche, wobei die verteilten Bereiche (3) insgesamt zwischen 5 Vol.-% und 50 Vol.-% des Verbundwerkstoffs (1) ausmachen, bevorzugt zwischen 5 Vol.-% und 30 Vol.-%.

5. Hartmetall-Cermet-Verbundwerkstoff nach einem der vorangehenden Ansprüche, wobei zumindest 20 Vol.-% der eingebetteten Bereiche (3) des Cermets zumindest fünf Hartstoffteilchen aufweisen.

6. Hartmetall-Cermet-Verbundwerkstoff nach einem der vorangehenden Ansprüche, wobei die zusammenhängende Phase (2) auch eines oder mehrere Elemente von Cr, V, Mo, Ti, Nb, Ta, Zr, Hf mit einem Gesamtanteil von weniger als 10 Gew.-% der zusammenhängenden Phase (2) aufweist.

7. Hartmetall-Cermet-Verbundwerkstoff nach einem der vorangehenden Ansprüche, wobei der metallische Binder (2b) der zusammenhängenden Phase (2) überwiegend aus Co gebildet ist, mit einem Co-Gehalt im Bereich zwischen 4-30 Gew.-% der zusammenhängenden Phase (2).

8. Hartmetall-Cermet-Verbundwerkstoff nach einem der vorangehenden Ansprüche, wobei der zweite metallische Binder (3b) Co und/oder Ni als Hauptbestandteil aufweist.

9. Werkzeug zur zerspanenden Bearbeitung oder zur Umformung mit einem Hartmetall-Cermet-Verbundwerkstoff (1) nach einem der vorangehenden Ansprüche.

10. Verwendung eines Hartmetall-Cermet-Verbundwerkstoffs (1) nach einem der Ansprüche 1 bis 8 in einem Werkzeug zur zerspanenden Bearbeitung oder Umformung von Werkstoffen.

11. Verfahren zur Herstellung eines Hartmetall-Cermet-Verbundwerkstoffs (1) mit zumindest den Schritten:
• Mischen eines teilgesinterten oder vollgesinterten Cermet-Granulats eines Titankarbid-, Titannitrid-, Titankarbonitrid-, Niobkarbid-, Niobkarbonitrid- oder Niobnitrid-basierten Cermets, das zumindest Hartstoffteilchen und 1 - 30 Gew.-% eines zweiten metallischen Binders aus
Co, Ni, Fe oder einer Legierung von diesen aufweist, mit Ausgangspulver für ein Wolframkarbid-basiertes Hartmetall, das einen metallischen Binder (2b) aus Co, Ni, Fe oder einer Legierung von diesen und Wolframkarbid-Teilchen (2a) aufweist, unter Zufügung einer Flüssigkeit als Flüssigphase zu einem Gemisch,
• Trocknen des Gemischs zu einem Hartmetall-Cermet-Verbund-Granulat oder -Pulver, und
• Formen und Sintern des Hartmetall-Cermet-Verbund-Granulats bzw. -Pulvers zu einem Hartmetall-Cermet-Verbundwerkstoff (1);
**dadurch gekennzeichnet, dass** die Teilchen des Cermet-Granulats eine nach DIN ISO 13320-1 nach dem Fraunhofer Modell gemessene Teilchengröße D(0.97) < 25 µm, bevorzugt < 15 µm, aufweisen, und zumindest 20 Vol.-% der Teilchen des Cermet-Granulats eine Partikelgröße von zumindest dem Dreifachen des mittleren Durchmessers der Wolframkarbid-Teilchen (2a) in dem Hartmetall-Cermet-Verbundwerkstoff (1) haben.

12. Verfahren nach Anspruch 11, wobei das Ausgangspulver für das Wolframkarbid-basierte Hartmetall Ausgangspulver für den metallischen Binder (2b) und Wolframkarbid-Pulver aufweist.

## Claims

1. Cemented carbide-cermet composite material (1) consisting of:
a contiguous phase (2) composed of tungsten carbide-based cemented carbide and comprising a metallic binder (2b) composed of Co, Ni, Fe or an alloy of these and tungsten carbide particles (2a) embedded in the metallic binder (2b) and
dispersed regions (3) of a titanium carbide-, titanium nitride-, titanium carbonitride-, niobium carbide-, niobium carbonitride- or niobium nitride-based cermet which are embedded in the contiguous phase (2) and comprise a second metallic binder (3b) composed of Co, Ni, Fe or an alloy of these and hard material particles (3a) embedded in the second metallic binder (3b),
**characterized in that** at least 97% by volume of the embedded dispersed regions (3) of the cermet have a longest diameter of < 25 µm and
at least 20% by volume of the embedded dispersed regions (3) of the cermet have a shortest diameter of at least three times the average diameter of the tungsten carbide particles (2a) in the contiguous phase (2),
where the % by volume are to be determined as indicated in the description.

2. Cemented carbide-cermet composite material (1) according to Claim 1, wherein the cermet is a titanium carbonitride-based cermet.

3. Cemented carbide-cermet composite material according to either of the preceding claims, wherein at least 97% by volume of the embedded regions (3) of the cermet have a longest diameter of < 15 µm.

4. Cemented carbide-cermet composite material according to any of the preceding claims, wherein the dispersed regions (3) in total make up from 5% by volume to 50% by volume of the composite material (1), preferably from 5% by volume to 30% by volume.

5. Cemented carbide-cermet composite material according to any of the preceding claims, wherein at least 20% by volume of the embedded regions (3) of the cermet have at least five hard material particles.

6. Cemented carbide-cermet composite material according to any of the preceding claims, wherein the contiguous phase (2) additionally comprises one or more elements from among Cr, V, Mo, Ti, Nb, Ta, Zr, Hf in a total proportion of less than 10% by weight of the contiguous phase (2).

7. Cemented carbide-cermet composite material according to any of the preceding claims, wherein the metallic binder (2b) of the contiguous phase (2) is formed predominantly by Co with a Co content in the range from 4 - 30% by weight of the contiguous phase (2).

8. Cemented carbide-cermet composite material according to any of the preceding claims, wherein the second metallic binder (3b) comprises Co and/or Ni as main constituent.

9. Tool for cutting machining or for forming comprising a cemented carbide-cermet composite material (1) according to any of the preceding claims.

10. Use of a cemented carbide-cermet composite material (1) according to any of Claims 1 to 8 in a tool for cutting machining or forming of materials.

11. Process for producing a cemented carbide-cermet composite material (1), comprising at least the steps:
• mixing of a partially sintered or fully sintered granular cermet material composed of a titanium carbide-, titanium nitride-, titanium carbonitride-, niobium carbide-, niobium carbonitride- or niobium nitride-based cermet comprising at least hard material particles and 1 - 30% by weight of a second metallic binder composed of Co, Ni, Fe or an alloy of these with starting powder for a tungsten carbide-based cemented carbide comprising a metallic binder (2b) composed of Co, Ni, Fe or an alloy of these and tungsten carbide particles (2a) with addition of a liquid as liquid phase to give a mixture,
• drying of the mixture to give a cemented carbide-cermet composite granular material or powder and
• shaping and sintering of the cemented carbide-cermet composite granular material or powder to give a cemented carbide-cermet composite material (1);
**characterized in that** the particles of the granular cermet material have a particle size D(0.97) measured in accordance with DIN ISO 13320-1 on the basis of the Fraunhofer model of < 25 µm,
preferably < 15 µm, and at least 20% by volume of the particles of the granular cermet material have a particle size of at least three times the average diameter of the tungsten carbide particles (2a) in the cemented carbide-cermet composite material (1).

12. Process according to Claim 11, wherein the starting powder for the tungsten carbide-based cemented carbide comprises starting powder for the metallic binder (2b) and tungsten carbide powder.

## Revendications

1. Matériau composite (1) de type métal dur-cermet constitué :
d'une phase continue (2) de métal dur à base de carbure de tungstène, qui présente un liant métallique (2b) de Co, Ni, Fe ou d'un alliage de ceux-ci et des particules (2a) de carbure de tungstène incorporées dans le liant métallique (2b), et
de zones (3) incorporées réparties dans la phase continue (2), d'un cermet à base de carbure de titane, de nitrure de titane, de carbonitrure de titane, de carbure de niobium, de carbonitrure de niobium ou de nitrure de niobium, qui présentent un deuxième liant métallique (3b) de Co, Ni, Fe ou d'un alliage de ceux-ci et des particules (3a) de matière dure incorporées dans le deuxième liant métallique (3b),
**caractérisé en ce**
**qu'**au moins 97 % en volume des zones (3) incorporées réparties du cermet possèdent un diamètre le plus long < 25 µm et
au moins 20 % en volume des zones (3) incorporées réparties du cermet possèdent un diamètre le plus court d'au moins le triple du diamètre moyen des particules (2a) de carbure de tungstène dans la phase continue (2),
les % en volume devant être déterminés comme indiqué dans la description.

2. Matériau composite (1) de type métal dur-cermet selon la revendication 1, le cermet étant un cermet à base de carbonitrure de titane.

3. Matériau composite de type métal dur-cermet selon l'une quelconque des revendications précédentes, au moins 97 % en volume des zones (3) incorporées du cermet possédant un diamètre le plus long < 15 µm.

4. Matériau composite de type métal dur-cermet selon l'une quelconque des revendications précédentes, les zones (3) réparties représentant au total entre 5 % en volume et 50 % en volume du matériau composite (1), préférablement entre 5 % en volume et 30 % en volume.

5. Matériau composite de type métal dur-cermet selon l'une quelconque des revendications précédentes, au moins 20 % en volume des zones (3) incorporées du cermet présentant au moins cinq particules de matière dure.

6. Matériau composite de type métal dur-cermet selon l'une quelconque des revendications précédentes, la phase continue (2) présentant également un ou plusieurs éléments parmi Cr, V, Mo, Ti, Nb, Ta, Zr, Hf en une proportion totale inférieure à 10 % en poids de la phase continue (2).

7. Matériau composite de type métal dur-cermet selon l'une quelconque des revendications précédentes, le liant métallique (2b) de la phase continue (2) étant formé principalement de Co, avec une teneur en Co dans la plage entre 4 et 30 % en poids de la phase continue (2).

8. Matériau composite de type métal dur-cermet selon l'une quelconque des revendications précédentes, le deuxième liant métallique (3b) présentant du Co et/ou du Ni en tant que composant principal.

9. Outil pour l'usinage par enlèvement de copeaux ou pour le formage comportant un matériau composite (1) de type métal dur-cermet selon l'une quelconque des revendications précédentes.

10. Utilisation d'un matériau composite (1) de type métal dur-cermet selon l'une quelconque des revendications 1 à 8 dans un outil pour l'usinage par enlèvement de copeaux ou pour le formage de matériaux.

11. Procédé pour la préparation d'un matériau composite (1) de type métal dur-cermet comportant au moins les étapes de :
• mélange d'un granulé de cermet partiellement fritté ou entièrement fritté d'un cermet à base de de carbure de titane, de nitrure de titane, de carbonitrure de titane, de carbure de niobium, de carbonitrure de niobium ou de nitrure de niobium, qui présente au moins des particules de matière dure et 1 à 30 % en poids d'un deuxième liant métallique de Co, Ni, Fe ou d'un alliage de ceux-ci, avec une poudre de départ pour un métal dur à base de carbure de tungstène qui présente un liant métallique (2b) de Co, Ni, Fe ou d'un alliage de ceux-ci et des particules (2a) de carbure de tungstène, avec ajout d'un liquide en tant que phase liquide pour donner un mélange,
• séchage du mélange pour donner un granulé ou une poudre de composite de type métal dur-cermet, et
• formage et frittage du granulé ou de la poudre de composite de type métal dur-cermet pour donner un matériau composite (1) de type métal dur-cermet ;
**caractérisé en ce que** les particules du granulé de cermet présentent une taille de particule D(0,97), mesurée selon la norme DIN ISO 13320-1 d'après le modèle de Fraunhofer, < 25 µm, préférablement < 15 µm, et au moins 20 % en volume des particules du granulé de cermet possèdent une taille de particule d'au moins le triple du diamètre moyen des particules (2a) de carbure de tungstène dans le matériau composite (1) de type métal dur-cermet.

12. Procédé selon la revendication 11, la poudre de départ pour le métal dur à base de carbure de tungstène présentant une poudre de départ pour le liant métallique (2b) et de la poudre de carbure de tungstène.
